# EUROPEAN PATENT APPLICATION

(11) **EP 4 653 409 A1**
(43) Date of publication of application: **26.11.2025**
(21) Application number: 24177899.2
(22) Date of filing: 24.05.2024
(51) Int. Cl.: C04B 35/632, C04B 35/634

(54) **A SLURRY COMPOSITION COMPRISING BIOBASED PLASTICIZERS**

(71) Applicant: Kuraray Europe GmbH, 65795 Hattersheim (DE)
(72) Inventor: Klee, Henrik, Düsseldorf (DE); Janßen, Christian, 65795 Hattersheim am Main (DE)
(74) Representative: Janßen, Christian Oliver

(57) **Abstract**

The present invention relates to a slurry composition comprising at least one polyvinyl acetal, at least one inorganic powder and at least one aliphatic carboxylic acid and/or at least one aliphatic carboxylic acid ester, characterized in that the aliphatic carboxylic acid and/or the aliphatic carboxylic acid ester comprises a biobased carbon content measured according to ASTM D6866 - 22 from 1 to 100%. The slurry is used to make a multilayer ceramic capacitor.

## Description

The present invention relates to a slurry composition comprising at least one polyvinyl acetal, at least one inorganic powder and at least one aliphatic carboxylic acid and/or at least one aliphatic carboxylic acid ester, characterized in that the aliphatic carboxylic acid and/or the aliphatic carboxylic acid ester comprises a biobased carbon content measured according to ASTM D6866 - 22 from 1 to 100%.

Ceramic materials for the electronics industry are often produced by sintering what is known as a green sheet, i.e. a film-like, thin molded body that contains the ceramic materials. To produce these green sheets, a suspension of metal oxides and organic solvents is first produced with the aid of plasticizers and dispersants. This suspension is then applied to a carrier film in the desired thickness using a suitable process (e.g. doctor blade process) and the solvent is removed. The resulting green sheet must be free of cracks, have a smooth surface and still have a certain elasticity. The plasticizers have an important function for achieving these properties. However, these plasticizers are currently based on fossil raw materials.

Polyvinyl acetals such as polyvinyl butyral (PVB) are frequently used as binders for the production of ceramic green sheets. To this end, DE 4 003 198 A1 describes the production of a casting slip for ceramic green films in which PVB with a residual polyvinyl acetate content of 0 to 2 % by weight is used as binder.

In recent years, multi-layer ceramic capacitors (MLCC) are becoming increasingly important for the electronic industry. MLCCs consist of a number of individual capacitors stacked together in parallel and contacted via the terminal surfaces. Due to the advancing miniaturization of the electronic components, the size of the powder particles can be as small as 10 nm. Hence, the production demands an increased accuracy of the ceramic sheets used therein.

The use of plasticizers based on fossil raw materials comes with many disadvantages. On one hand, fossil raw materials are finite, which means that their availability is likely to decline in the future, which is usually accompanied by rising prices. On the other hand, the use of plasticizers based on fossil raw materials contributes to an increase in greenhouse gas emissions. Another disadvantage is that plasticizers based on fossil raw materials are not available regionally and therefore have to be transported over long distances, which results in additional greenhouse gas emissions. It would therefore be desirable to use plasticizers that are produced on the basis of biobased raw materials in the sense of a sustainable circular economy.

Various processes are known for the production of plasticizers based on biobased raw materials. These include, for example, the epoxidation of vegetable oils such as rapeseed oil, sunflower oil or soybean oil, the fermentation of sugars and the esterification of fatty acids with alcohols.

Biobased raw materials are usually plant residues, which often come from different sources and can therefore also have various impurities that cannot always be completely removed. These impurities can also include heavy metals and pesticides. Usually, the plant residues are decomposed under very harsh conditions, resulting in the formation of undesirable by-products. These by-products are usually insoluble and intensely colored. These by-products cannot be completely removed with reasonable effort, so a small amount always remains.

It has become evident that plasticizers containing heavy metals as impurities have a particularly negative effect on the production of green sheets, as it can be assumed that the heavy metals they contain can cause short circuits during subsequent use in electronic applications.

Accordingly, it was an object of the present invention to enable the use of biobased plasticizers in slurry compositions for the production of ceramic green sheets.

It has now been surprisingly found that biobased aliphatic carboxylic acids and/or their aliphatic esters can be used as plasticizers in slurry compositions for the production of ceramic green sheets.

It can be assumed that heavy metals accumulate in the plasticizer, particularly through non-covalent interactions with aromatic ring systems comprised in biobased plasticizers, which originate from impurities in the plant residues. Heavy metals may either be of natural origin or may be emitted into the environment as a result of human activities. In agriculture, for example, various copper, iron or zinc compounds are used as pesticides.

Accordingly, a first aspect of the present invention relates to a slurry composition comprising at least one polyvinyl acetal, at least one inorganic powder and at least one aliphatic carboxylic acid and/or at least one aliphatic carboxylic acid ester, characterized in that the aliphatic carboxylic acid and/or the aliphatic carboxylic acid ester comprises a biobased carbon content measured according to ASTM D6866 - 22 from 1 to 100%.

The term "biobased carbon content" is to be understood according to the definition provided in standard ASTM D6866 - 22.

Preferably, the biobased carbon content is more than 10%, or more than 20%, or more than 30%, or more than 40%, or more than 50%, or more than 60%, or more than 70%, or more than 80%, or more than 90% according to ASTM D6866 - 22. More preferably, at least the aliphatic carboxylic acid or the aliphatic ester comprises a biobased carbon content measured according to ASTM D6866 - 22 from 1.0 to 100%.

Aliphatic carboxylic acids and/or aliphatic esters may have a plasticizing effect on the slurry composition comprising at least one polyvinyl acetal and at least one inorganic powder and can therefore also be referred to as "plasticizers" below.

Suitable aliphatic carboxylic acids are selected from monocarboxylic acids, dicarboxylic acids or tricarboxylic acids. The carbon comprised in the aliphatic carboxylic acids can either be based on fossil raw materials or biobased raw materials. Preferably, the carbon comprised in the aliphatic carboxylic acids result from a mixture of biobased and fossil based raw materials. More preferably the carbon comprised in the aliphatic carboxylic acids is based on biobased raw materials. The aliphatic carboxylic acids may either be branched or linear having 3 to 20 carbon atoms. Examples of aliphatic carboxylic acids are propionic acid, 2-hydroxypropanoic acid, 3-hydroxypropionic acid, n-butyric acid, isobutyric acid, 2-hydroxybutanedioic acid, butanedioic acid, 2-methylbutyric acid, 3-methylbutyric acid, levulinic acid, valeric acid, 2-methylpentanoic acid, n-hexanoic acid, hexanedioic acid, 2-ethylbutyric acid, n-heptanoic acid, 2-methylhexanoic acid, 2-ethylhexanoic acid, n-nonanoic acid, azelaic acid, 2-methyloctanoic acid, 7-methyloctanoic acid, 3,5,5-trimethylhexanoic acid, decanoic acid, decandioic acid, tetradecanoic acid, or citric acid.

Suitable aliphatic alcohols can be selected from mono alcohols, di alcohols, tri alcohols, polyols, ether diols, or higher glycols. The carbon comprised in the aliphatic alcohols can either be based on fossil raw materials or biobased raw materials. Preferably, the carbon comprised in the aliphatic alcohols result from a mixture of biobased and fossil based raw materials. More preferably the carbon comprised in the aliphatic alcohols is based on biobased raw materials. The aliphatic alcohols may either be branched or linear having 1 to 15 carbon atoms. Examples of the aliphatic alcohols are methanol, ethanol, 1,2-propanediol, 1,3-propanediol, glycerol, n-butanol, 2-methylbutan-2-ol, 1,6-hexanediol, diethylene glycol, triethylene glycol, tetraethylene glycol, propylene glycol or butyldiglycol.

Suitable aliphatic esters can be obtained by esterification of an aliphatic carboxylic acid with an aliphatic alcohol. The carbon comprised in the aliphatic esters can either be based on fossil raw materials or biobased raw materials. Preferably, the carbon comprised in the aliphatic esters result from a mixture of biobased and fossil based raw materials. More preferably the carbon comprised in the aliphatic esters is based on biobased raw materials. Examples of aliphatic esters are triethylene glycol bis(2-ethylhexanoate), bis[2-(2-butoxyethoxy)ethyl] adipate, triethylhexanoin, 2-hydroxypropyl 2-ethylhexanoate, dibutyl succinate, tetraethylene glycol diheptanoate, triethylene glycol bis(2-ethylbutyrate), triethylene glycol diheptanoate or tetraethylene glycol di-2-ethylhexanoate.

Preferably, the aliphatic carboxylic acid and/or the aliphatic ester is comprised in the slurry composition in an amount from 1 to 60 wt%. More preferably, the aliphatic carboxylic acid and/or the aliphatic carboxylic acid ester present in the slurry composition is 10 to 60 wt%, or 15 to 60 wt%, or 20 to 60 wt%, or 25 to 60 wt%, or 30 to 60 wt%, or 35 to 60 wt%, or 40 to 60 wt%, or 45 to 60 wt%, 50 to 60 wt%, or 55 to 60 wt%.

The inorganic powder can be chosen from finely ground granules of paraelectric or ferroelectric raw materials and include titanium dioxide (rutile), preferably modified by additives of zinc, zirconium, niobium, magnesium, tantalum, cobalt and/or strontium, as well as compounds chosen from MgNb₂O₆, ZnNb₂O₆, MgTa₂O₆, ZnTa₂O₆, (ZnMg)TiO₃, (ZrSn)TiO₄, BaTiO₃, and Ba₂Ti₉O₂₀. The average particle diameter of the inorganic pigments is preferably about 0.01 to 1 µm.

Preferably, the polyvinyl acetal has a molecular weight of equal to or more than 20,000 g/mol when measured by gel permeation chromatography according to DIN ISO 16014 1:2019-05.

The molecular weight is determined by gel permeation chromatography according to DIN ISO 16014 1:2019-05. Preferably, the molecular weight is equal to or more than 40,000 g/mol, more preferably 50,000 g/mol. Also preferably, the molecular weight is equal to or less than 200,000 g/mol, more preferably equal to or less than 175,000 g/mol, most preferably equal to or less than 150,000 g/mol and specifically equal to or less than 100,000 g/mol.

Preferably, the acetal groups of the polyvinyl acetal individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. More preferably, they derive from the condensation reaction with iso-butyraldehyde, acetaldehyde and/or n-butyraldehyde. Most preferably, the polyvinyl acetal is polyvinyl butyral or a mixed polyvinyl acetal derived from a condensation with n-butyraldehyde and acetaldehyde.

Although there is no particular limitation to the method for producing the polyvinyl acetals used in this embodiment of the present invention, they can be produced by a method in which an aldehyde is added to a polyvinyl alcohol solution under acidic conditions and thus, subjected to an acetalization reaction.

Preferably, the degree of acetalization of the polyvinyl acetals used in the present invention is 50 mol% or more and less than 90 mol%, more preferably the lower limit of the degree of acetalization is more than 60 mol%, even more preferably more than 70 mol% and most preferably more than 80 mol%. Further, the upper limit of the degree of acetalization is more preferably 90 mol% or less, and most preferably 85 mol% or less.

Preferably, the percentage of vinyl alcohol units in the polyvinyl acetals of the present invention is 10 to 25 mol%, more preferably 15 to 20 mol% based on the total monomer unit constituting the resin.

The vinyl alcohol content and vinyl acetate content of polyvinyl acetal were determined in accordance with DIN ISO 3681 (Acetate content) and DIN ISO 53240 (PVA content).

Preferably, the acetal group has 2 to 7 carbon atoms and is derived from the same aldehyde(s) as described above. Most preferably, the acetal group is derived from n-butyraldehyde or from a mixture of n-butyraldehyde and acetaldehyde.

The organic solvent may be chosen from aromatic compounds, such as toluene and xylene, and alcohol compounds, such as methanol, ethyl alcohol, isopropyl alcohol and butyl alcohol and more preferably, mixtures thereof. Most preferably, the organic solvent is a mixture of ethanol and toluene.

The term "heavy metal ions" as used herein shall refer to heavy metal ions that do not fulfill any purpose according to the invention, i.e. that are not added to the slurry composition on purpose, for example, heavy metal ions that may be comprised in the inorganic powder as a functional additive are not counted.

Preferably, the concentration of heavy metal ions comprised in the slurry composition is between 0.01 to 100 ppm, also preferably between 0.1 to 100 ppm and also preferably between 1 to 100 ppm. More preferably, the concentration of heavy metal ions comprised in the slurry composition is less than 10 ppm, also preferably less than 5 ppm, also preferably less than 1 ppm, also preferably less than 1 ppm, also preferably less than 0.1 ppm and also preferably less than 0.01 ppm. Most preferably, the concentration of heavy metal ions comprised in the slurry composition is between 0.001 to 10 ppm, also preferably 0.01 to 10 ppm, also preferably 0.1 to 10 ppm and also preferably 1 to 10 ppm.

The heavy metal ions comprised in the slurry composition can be titanium, vanadium, chromium, manganese, iron, nickel, copper, zinc, gallium, germanium, arsenic, zirconium, niobium, molybdenum, technetium, ruthenium, rhodium, palladium, silver, cadmium, indium, tin, antimony, lutetium, hafnium, tantalum, tungsten, rhenium, osmium, iridium, platinum, gold, mercury, thallium, lead, bismuth, polonium, lanthanum, cerium, praseodymium, neodymium, promethium, samarium, europium, gadolinium, terbium, dysprosium, holmium, erbium, thulium, ytterbium and lutetium.

Analysis of heavy metal ion content can be performed by atomic absorption spectroscopy (AAS).

Suitable dispersing agents include fish oil, phosphoric acid esters and functional polymers comprising polyoxyalkylene groups on side chain, such as the MALIALIM^{™} series commercially available from NOF America Cooperation.

The method to produce the slurry composition is not specifically limited. Various dispersing methods may be used, for example, a method of using a media-type mill, such as a bead mill, a ball mill, an attritor, a paint shaker and a sand mill; a method of kneading a powdered ceramic, a dispersing medium, a dispersing agent, a binder, a plasticizer and the like; and a method of using a three-roll mill. Using a three-roll mill, the method includes dispersing a powdered inorganic pigment in an organic solvent (mixture) together with a dispersing agent, a binder, a plasticizer, and the like. The mixture is passed through a small gap between a first roller and a second roller, which roll independently from each other and are adjacent to each other with the small gap therebetween, so as to be compressed and kneaded, and subsequently, the mixture is passed between the second roller and a third roller, which rolls and is adjacent to the second roller with a smaller gap therebetween than the gap between the first and the second rollers, so as to be further compressed and kneaded.

A sheet comprising the slurry can be used as a ceramic green sheet. Such a ceramic green sheet is also encompassed by the present invention.

The ceramic green sheet serves as a substrate for manufacturing ceramic electronic components. To create such components, follow these steps: apply an electrode layer paste to the ceramic green sheet's surface, stack multiple sheets with electrode layers, thermally pressure-bond them, and then debind and fire the resulting laminate.

The ceramic electronic component has a wide range of applications. Examples include multilayer ceramic capacitors, inductors, piezoelectric actuators, varistors, thermistors, EMI filters, aluminium nitride multilayer substrates, and alumina multilayer substrates. All these fall within the scope of the present invention.

## Claims

1. A slurry composition comprising at least one polyvinyl acetal, at least one inorganic powder and at least one aliphatic carboxylic acid and/or at least one aliphatic carboxylic acid ester, **characterized in that** the aliphatic carboxylic acid and/or the aliphatic carboxylic acid ester comprises a biobased carbon content measured according to ASTM D6866 - 22 from 1 to 100%.

2. The slurry composition according to claim 1 wherein at least the aliphatic carboxylic acid comprises a biobased carbon content measured according to ASTM D6866 - 22 from 1 to 100%.

3. The slurry composition according to claim 1 or 2 wherein the aliphatic carboxylic acid and/or the aliphatic carboxylic acid ester is present in the slurry composition in an amount between 1 to 60 wt%.

4. The slurry composition according to any one of claim 1 to 3 wherein the polyvinyl acetal is polyvinyl butyral.

5. The slurry composition according to any one of claim 1 to 4 wherein the slurry composition further comprises an organic solvent.

6. The slurry composition according to any one of claim 1 to 5 comprising heavy metal ions in a concentration of 0.001 ppm or more and 100 ppm or less.

7. A process to manufacture a ceramic green sheet using the slurry composition according to any one of claim 1 to 6.

8. A ceramic green sheet manufactured according to the process of claim 7.

9. A process to manufacture a multilayer ceramic capacitor using the ceramic green sheet according to claim 8.

10. A multilayer ceramic capacitor manufactured according to the process of claim 9.
